# EUROPÄISCHE PATENTSCHRIFT

(11) **EP 1 290 770 B1**
(45) Veröffentlichungstag und Bekanntmachung des Hinweises auf die Patenterteilung: **07.11.2007**
(21) Anmeldenummer: 01951552.7
(22) Anmeldetag: 02.06.2001
(51) Int. Cl.: H02H 7/085, E05F 15/16

(54) **VERFAHREN ZUR STEUERUNG DER VERSTELLBEWEGUNG EINES MITTELS EINES ELEKTROMOTORS BEWEGTEN TEILS EINER SCHLIESSVORRICHTUNG IN EINEM FAHRZEUG**
METHOD FOR CONTROLLING THE DISPLACEMENT OF A PART, DISPLACED BY AN ELECTROMOTOR, OF A CLOSURE DEVICE IN A MOTOR VEHICLE
PROCEDE POUR COMMANDER LE MOUVEMENT DE REGLAGE D'UNE PARTIE D'UN SYSTEME DE FERMETURE QUI EST ENTRAINEE PAR UN MOTEUR ELECTRIQUE DANS UN VEHICULE

(30) Priorität: 14.06.2000 DE 10028445
(43) Veröffentlichungstag der Anmeldung: 12.03.2003
(73) Patentinhaber: Conti Temic microelectronic GmbH, 90411 Nürnberg (DE)
(72) Erfinder: SPRENG, Klaus, 85055 Ingolstadt (DE); LIEPOLD, Erich, 85092 Kösching (DE)
(86) Internationale Anmeldenummer: PCT/EP2001/006308
(87) Internationale Veröffentlichungsnummer: WO 2001/099252

(56) Entgegenhaltungen:
- WO-A-98/40945

## Beschreibung

Die Erfindung betrifft ein Verfahren zur Steuerung der Verstellbewegung eines mittels eines Elektromotors bewegten Teils einer Schließvorrichtung in einem Fahrzeug gemäß dem Oberbegriff des Anspruchs 1.

Derartige Verfahren sind aus der DE 40 20 351 C2 und DE 19745597 A1 bekannt. Zur Einklemmerkennung erfolgt dabei ein Vergleich mindestens einer Zustandsgröße des Elektromotors bzw. der Schließvorrichtung mit einem einen Einklemmfall definierenden Kennwert. Als Zustandsgrößen werden dabei beispielsweise die Verstellkraft, der Motorstrom, die Drehzahl oder das Drehmoment des Motors betrachtet. Denkbar ist auch die Erfassung der Positionsänderung der Schließvorrichtung oder deren Geschwindigkeit. Der Einklemmfall wird dann anhand entsprechender Kennwerte, beispielsweise einer maximalen Verstellkraft, eines maximalen Motorstroms, einer Mindestdrehzahl etc. definiert.

Durch äußere Einflüsse, insbesondere das Schließen von Fahrzeugtüren und anderen beweglichen Karosserieteilen können dabei auf die Schließvorrichtung Kräfte einwirken, die der Verstellbewegung entgegenwirken, so dass die Zustandsgrößen bei entsprechender Stärke der Kräfte die Kennwerte für einen Einklemmfall erreichen und eine Notabschaltung einleiten, gekennzeichnet durch ein Reversieren, also eine sofortige entgegengesetzte Bestromung des Motors, was zum deutlichen Zurückbewegen des bewegten Teils, häufig sogar bis in dessen vollständige OffenStellung führt. Während dies bei einem Tatsächlichen Einklemmfall für den Schutz möglicherweise eingeklemmter Personen bzw. Körperteile unersetzlich ist, könnte ein Endkunde im Falle einer durch äußere Einflüsse bedingten Erreichung der den Einklemmfall anzeigenden Vergleichsergebnisse dieses zumeist vollständige Reversieren als eine Fehlfunktion interpretieren.

Die DE 40 20 351 C2 schlägt daher vor, mittels eines Sensors die auf die Karosserie einwirkenden Beschleunigungskräfte zu erfassen und als einen Grundpegel zu berücksichtigen, wobei eine nähere Ausgestaltung nicht offenbart wird. Berücksichtigt man die Stärke und Dynamik der auf eine Karosserie einwirkenden Beschleunigungskräfte, so bleibt fraglich, ob und wie eine Berücksichtigung in geeigneter Weise technisch realisierbar ist.

Ein weiteres Verfahren gemäß des Stands der Technik ist in Dokument WO-A-9840945 offenbart.

Demgegenüber schlägt die DE 197 45 597 A1 vor, die Verstellkraft des Motors als eine Summe aus einer zum Verstellen des Bauteils notwendigen Kraft und einer einstellbaren Überschußkraft zu steuern, wobei Verstell- bzw. Überschußkraft in Abhängigkeit von auf die Karosserie einwirkenden Kräften geregelt werden. Abgesehen von einer unklaren Bestimmung der zum Verstellen des Bauteils notwendigen Kraft und dem Aufwand für eine exakte Regelung der Verstellkraft des Motors erweist auch hier sich der Aufwand für die Berücksichtigung der äußeren Kräfte als erheblich.

Alternativ wird die Veränderung von Verstell- bzw. Überschußkraft in Abhängigkeit von Öffnungs- und Schließvorgängen beweglicher Karosserieteile geregelt, indem mittels Sensoren die Position der beweglichen Karosserieteile erfasst und eine Änderung insbesondere Öffnungs- und Schließvorgänge erkannt werden. In einem solchen Falle wird die Erhöhung der Überschußkraft oder gar die Aussetzung des Einklemmschutzes vorgeschlagen. Dadurch wird jedoch eine Einklemmgefährdung wieder in Kauf genommen. Außerdem setzt dies voraus, dass das Steuergerät für die Verstellbewegung noch vor dem Eintritt einer Einklemmerkennung ein Signal von den Sensoren über die Positionsänderung erhält.

Aufgabe der Erfindung ist daher, ein alternatives Verfahren zur Steuerung der Verstellbewegung einer Schließvorrichtung anzugeben, welches einerseits eine zuverlässige und frühzeitige Einklemmerkennung ermöglicht, andererseits in einfacher Weise äußere Einflüsse durch bewegliche Karosserieteile berücksichtigt.

Diese Aufgabe wird durch die kennzeichnenden Merkmale des Anspruchs 1 gelöst. Vorteilhafte Weiterbildungen sind den Unteransprüchen zu entnehmen.

So wird beim Vorliegen eines einen Einklemmfall anzeigenden Vergleichsergebnisses der Elektromotor für eine vorgegebene kurze Zeitdauer gestoppt oder alternativ eine Reversierung eingeleitet. Es wird dabei geprüft, ob in einem vorgegebenen Zeitbereich vor und/oder nach dem Auftreten des den Einklemmfall anzeigenden Vergleichsergebnisses ausgehend von einer vorgegebenen ersten Position des Karosserieteils eine Änderung der Position aufgetreten ist bzw. auftritt.

Falls innerhalb dieses Zeitbereichs das Positionssignal eine Änderung gegenüber der ersten Position eines Karosserieteils anzeigt, wird die Verstellbewegung in Schließrichtung fortgesetzt, anderenfalls ein Einklemmfall angenommen und der Elektromotor reversiert bzw. die Reversierung fortgesetzt.

Die Zeitdauer kann dabei entsprechend der Reaktionszeit des Sensors und der Laufdauer des Positionssignals bis zur Steuerung so kurz bemessen werden, dass der Kunde diese Pause bzw. das kurzzeitige Reversieren während der Zeitdauer nicht bzw. nicht als störend bemerkt. Insbesondere erweisen sich bereits Zeitdauern von ca. 150 bis 100 msec oder sogar darunter als ausreichend, um durch Überwachung der Sensoren zwischen einem tatsächlichen Einklemmfall oder aber einem durch das Schließen eines Karosserieteils, insbesondere der Tür, bedingten vergleichbar starken Ereignis zu unterscheiden. Berücksichtigt man, dass zunächst das bewegte Teil einschließlich der mechanischen Komponenten über eine nicht unerhebliche Trägheit verfügen und daher innerhalb einer Zeitdauer von ca. 100 msec selbst bei Reversierbestromung kaum tatsächlich zum Stillstand kommen und zudem diese Zeitdauer in Bezug auf die Aufnahmefähigkeit des menschlichen Auges zu kurz ist, so wird klar, daß der Endkunde selbst ein kurzzeitig eingeleitetes Reversieren nicht bemerken wird. Andererseits weisen das kurzzeitige Stoppen oder Reversieren gegenüber den im Stand der Technik bekannten Alternativen einer Schwellenerhöhung oder gar einer Deaktivierung des Einklemmschutzes eine entscheidend höhere Sicherheit im tatsächlichen Einklemmfall auf.

Eine erste Weiterbildung des Verfahrens ergibt sich bei gleichzeitigem Vorliegen des einen Einklemmfall anzeigenden Vergleichsergebnisses und der ersten Position des Karosserieteils, indem der Elektromotor zunächst für die vorgegebene Zeitdauer wieder gestoppt bzw. reversiert wird, und falls innerhalb dieser Zeitdauer das Positionssignal eine Änderung gegenüber der ersten Position eines Karosserieteils anzeigt, die Verstellbewegung fortgesetzt wird. Es wird also der Fall abgedeckt, indem bspw. aufgrund langsamer Datenübertragung das Signal über die Positionsänderung erst so verzögert eintrifft, dass die Erkennerkennung in Falle entsprechend starker Erschütterungen bereits angesprochen hat.

Eine weitere Weiterbildung des Verfahrens ergibt sich, falls ausgehend von der vorgegebenen ersten Position eine Änderung der Position des Karosserieteils erkannt wird und innerhalb eines vorgegebenen Zeitbereichs ab dieser Änderung ein einen Einklemmfall anzeigendes Vergleichsergebnis auftritt. Der Elektromotor wird auch in diesem Falle für die vorgegebene Zeitdauer gestoppt und die Verstellbewegung nachfolgend fortgesetzt wird, wobei die Zeitdauer dieses Stopps mit dem aus der ersten Weiterbildung nicht identisch sein muss, vorzugsweise deutlich kürzer ist. Diese Weiterbildung deckt also den Fall eines bereits erkannten Türschließvorgangs und eines unmittelbar anschließenden Einklemmfalls ab.

Die Kennwerte zum Vergleich mit den für ein Einklemmen des Bauteils signifikanten Zustandsgrößen werden bei erster, insbesondere bei geöffneter Position eines Karosserieteils in Richtung einer zeitlich späteren Einklemmerkennung angepasst. Eine Anpassung in Richtung einer zeitlich späteren Einklemmerkennung bedeutet beispielsweise eine Erhöhung des Einklemmkennwerts des Motorstroms oder eine Erniedrigung des Kennwerts der Drehzahl bzw. der Verstellgeschwindigkeit. Außerdem können die Kennwerte zum Vergleich mit den für ein Einklemmen des Bauteils signifikanten Zustandsgrößen in Abhängigkeit von der Position und Bewegungsrichtung des beweglichen Bauteils angepasst werden. Bevorzugter Weise bleibt damit auch nach Ablauf der Zeitdauer des Stoppens bzw. Reversierens die Einklemmerkennung für die Fortsetzung der Schließbewegung grundsätzlich in aktiv, ggfs. mit relativ hohen Kennwerten, so daß bei einem tatsächlich zeitgleich mit dem Türschließen eintretenden Einklemmfall dieser auch bei der Fortsetzung der Bewegung erkannt und eine entsprechende Notabschaltung eingeleitet wird.

Die Erfindung soll nachfolgend anhand eines Ausführungsbeispiels und der Figuren näher erläutert werden. Kurze Beschreibung der Figuren:
- Figur 1: Ablauf des Verfahrens und Verhalten des Motorstroms und Einklemmstromkennwerts bei Änderung der Position der Tür
- Figur 2: Türpositionssensorsignal
- Figur 3: Ablauf des Verfahrens mit kurzzeitiger Reversierung
- Figur 4: Bewegungsänderung des bewegten Teils pro Zeiteinheit während des Verfahrens

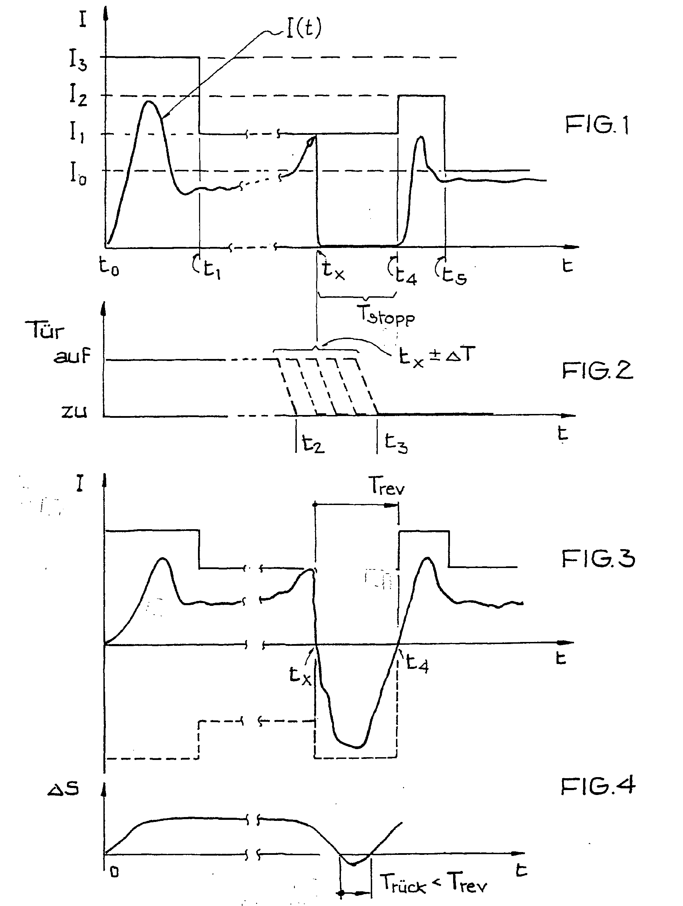

Die Figur 1 zeigt das Verhalten des Motorstroms I(t) als eine einklemmsignifikante Zustandsgröße des Elektromotors. Analog können, wie eingangs bereits erläutert, auch andere einklemmsignifikante Zustandsgrößen, beispielsweise die Verstellgeschwindigkeit der Schließvorrichtung verwendet werden. Der Motorstrom I(t) wird mit einem Einklemmstromkennwert verglichen, der in der besonders bevorzugten Weiterbildung in Figur 1 die Werte I0,I1,I2 bzw. I3 annimmt, wobei die Wahl des Wertes in Abhängigkeit von bestimmten Ereignisses erfolgt und nachfolgend noch näher erläutert wird.

Die Figur 2 zeigt das Positionssignal eines die Position eines beweglichen Karosserieteils, in diesem Fall einer Tür, erfassenden Sensors, in diesem Beispiel ein Türschalter mit den Signalzuständen Tür "auf" bzw. "zu". Für Fehler bei der Einklemmerkennung ist dabei besonders die Erschütterung beim Schließen der Tür von Interesse.

Beim Vorliegen eines einen Einklemmfall anzeigenden Vergleichsergebnisses in tx wird der Elektromotor für eine vorgegebene Zeitdauer Tstopp gestoppt und der Motorstrom l(t) fällt ab. Es wird geprüft, ob in einem vorgegebenen Zeitbereich tx±ΔT vor und/oder nach dem Auftreten des den Einklemmfall anzeigenden Vergleichsergebnisses ausgehend von einer vorgegebenen ersten Position, in diesem Fall Tür "auf" des Karosserieteils eine Änderung der Position (Tür => zu) aufgetreten ist bzw. auftritt. In diesem Falle wird die Verstellbewegung fortgesetzt, wie zu t4 in Figur 1 zu erkennen. Anderenfalls wird ein Einklemmfall angenommen und der Elektromotor reversiert.

Die Betrachtung des Zeitbereichs tx±ΔT vor und/oder nach dem Auftreten des den Einklemmfalls in tx berücksichtigt die in den verschiedenen Systemen recht unterschiedliche Anbildung der Positionssensoren an das Steuergerät. So kann bei direkter Anbindung beispielsweise des Türschalters an das für die Verstellsteuerung der Fensterscheiben zuständige Türsteuergerät das Signal die Positionsänderung durchaus noch vor dem Erkennen des (erschütterungsbedingten und damit nicht realen) Einklemmfalls ausgewertet werden. Wird der Türschalter jedoch über einen zentralen CAN-Bus abgefragt, so kann bis zum Eintreffen der Information über die Positionsänderung der (erschütterungsbedingte) Einklemmfall bereits erkannt worden sein. Durch den Stopp für die vorgegebene Zeitdauer Tstopp kann nun beim Erkennen eines unmittelbar vorangehenden Schließens der Tür auch in diesem Fall ein irrtümliches Reversieren vermieden werden, ohne dafür den Einklemmschutz aufheben zu müssen.

Die Länge und Ausrichtung des zu betrachtenden Zeitbereichs tx±ΔT, kann , muss jedoch nicht vor und nach dem Auftreten des den Einklemmfalls in tx liegen. Insbesondere muss dieser Zeitbereich nicht symmetrisch zum Einklemmzeitpunkt tx liegen. Es wird durch diesen Zeitbereich die für jeden Fahrzeugtyp individuell anzupassende verzögerte Ausbreitung der Erschütterung bei der Positionsänderung des Karosserieteils, die Verzögerung beim Ansprechen der Einklemmerkennung und die Signallaufzeit des Positionssignals berücksichtigt.

Kann davon ausgegangen werden, dass die Positionsänderung immer erst nach dem Ansprechen der Einklemmerkennung erfolgt, ergibt sich eine erste Weiterbildung des Verfahrens. Dabei wird bei gleichzeitigem Vorliegen des einen Einklemmfall anzeigenden Vergleichsergebnisses (i(t)=l1) und der ersten Position des Karosserieteils (Tür auf) in tx der Elektromotor zunächst für die vorgegebene Zeitdauer Tstopp wieder gestoppt, und falls innerhalb dieser Zeitdauer das Positionssignal eine Änderung gegenüber der ersten Position eines Karosserieteils anzeigt, die Verstellbewegung fortgesetzt. Der zu betrachtende Zeitbereich (in Figur 1 tx±ΔT bezeichnet) entspricht dann Tstopp. Es wird dann erst ab tx eine Positionsänderung erwartet. In einem einfachen Ausführungsbeispiel bedeutet dies, dass die Position der Türen des Fahrzeugs überwacht und bei gleichzeitigem Vorliegen des einen Einklemmfall anzeigenden Vergleichsergebnisses und eines eine geöffnete Tür anzeigenden Positionssignals der Elektromotor zunächst für eine vorgegebene Zeitdauer gestoppt und dann die Verstellbewegung fortgesetzt wird, wenn innerhalb dieser Zeitdauer ein Schließen der Tür anzeigt wird.

Eine weitere Weiterbildung des Verfahrens ergibt sich im umgekehrten Fall, wenn die Positionsänderung immer vor dem Ansprechen der Einklemmerkennung erkannt werden kann. Wird ausgehend von der vorgegebenen ersten Position (Tür auf) eine Änderung der Position des Karosserieteils erkannt und tritt innerhalb eines vorgegebenen Zeitbereichs ab dieser Änderung ein einen Einklemmfall anzeigendes Vergleichsergebnis auf, so wird der Elektromotor auch in diesem Falle für die vorgegebene Zeitdauer gestoppt und die Verstellbewegung nachfolgend fortgesetzt, wobei die Zeitdauer dieses Stopps mit dem aus der ersten Weiterbildung nicht identisch sein muss, vorzugsweise deutlich kürzer ist.

Die Länge der Zeitdauer Tstopp wird dabei relativ kurz gewählt und berücksichtigt vor allem die Signallaufzeit und das Abklingen der Erschütterung. Versuche zeigten, dass Zeitdauern für Tstopp um und sogar unter 100msec dafür bereits ausreichen. Im günstigsten Fall kommt das zu bewegende Teil dabei gar nicht vollständig zum Stillstand. Diese kurze Unterbrechung wird vom Kunden auf jeden Fall nicht oder zumindest nicht als störend bemerkt.

Für den Fortsetzung der Verstellbewegung erforderlichen Wiederanlauf ergeben sich vielfältige Möglichkeiten, um die Einklemmgefahr auch dort zu vermeiden bzw. zu begrenzen. Zwar tritt durch den Wiederanlauf einer höherer Anlaufstrom auf, jedoch übersteigt dieser nur so kurz zwischen t4 und t5 die für die Einklemmerkennung üblichen niedrigen Schwellen I0 bzw. I1, dass die Scheibe in diesem Zeitbereich noch überhaupt keine oder nur eine so geringere Fortbewegung aufgenommen hat, dass es zu keinem Einklemmen kommen kann. Die Kennwerte zum Vergleich mit den für ein Einklemmen des Bauteils signifikanten Zustandsgrößen können zudem in Abhängigkeit von der Position und Bewegungsrichtung des beweglichen Bauteils angepasst werden. dies erfolgt in diesem Beispiel beispielsweise dadurch, dass zwischen t0 und t1 zunächst der Anlauf der Scheibe im Inneren Bereich der Tür, wo keine Einklemmgefahr besteht, mit einer hohen Schwelle 13 verglichen wird. Ab t1 wird auf eine deutlich niedrigere Schwelle I1 geschaltet, wobei diese noch etwas höher ist als die Schwelle I0. Es liegt nämlich eine geöffnete Position eines Karosserieteils, in diesem Fall der Tür vor, so dass in dieser besonders bevorzugten Ausgestaltung die Kennwerte zum Vergleich mit den für ein Einklemmen des Bauteils signifikanten Zustandsgrößen in Richtung einer zeitlich späteren Einklemmerkennung angepasst werden, also von I0 auf I1 erhöht werden, um kleinere Erschütterungen bereits so abzufangen.

Zum Wiederanlauf in t4 wird der Kennwert kurzzeitig auf die Schwelle 12 erhöht, die jedoch kleiner als I3 gewählt werden kann. Ab t5, vorzugsweise noch vor dem eigentlichen Eintritt der Fortsetzung der Verstellbewegung der Scheibe, wird auf der Kennwert auf die niedrigste Schwelle I0 geschaltet, da die Tür jetzt geschlossen ist.

Besonders bevorzugt ist die Verwendung des aus der DE 19710388 A1 bekannten Verfahrens der Anmelderin, durch welches in jeder Phase, auch im Anlaufbereich jederzeit ein Einklemmen erkannt werden kann, so dass insbesondere auch im Wiederanlauf ein Einklemmen sicher erkannt werden kann.

Figur 3 verdeutlicht nun noch die alternative Ausgestaltung, bei der beim Vorliegen eines einen Einklemmfall anzeigenden Vergleichsergebnisses der Elektromotor für die Zeitdauer Trev sogar reversiert, also in entgegengesetzte Richtung bestromt wird. Der Motorstrom I(t) wird dabei also in Figur 3 stark negativ. Es wird dabei wiederum analog am Türsensor geprüft, ob in dem vorgegebenen Zeitbereich tx±ΔT vor und/oder nach dem Auftreten des den Einklemmfall anzeigenden Vergleichsergebnisses ausgehend von einer vorgegebenen ersten Position, in diesem Fall Tür "auf" des Karosserieteils eine Änderung der Position (Tür => zu) aufgetreten ist bzw. auftritt. In diesem Falle wird die Verstellbewegung wieder in die Schließrichtung fortgesetzt, wie zu t4 auch in Figur 3 zu erkennen. Anderenfalls wird ein Einklemmfall angenommen und die Reversierung des Elektromotors fortgesetzt.

Figur 4 skizziert dabei ergänzend die tatsächliche Bewegungsänderung des bewegten Teils pro Zeiteinheit während dieses Verfahrens, insbesondere während des Reversierens nach Figur 3 und macht deutlich, daß die tatsächliche Rückwärtsbewegung des bewegten Teils auch beim Reversieren aufgrund der Trägheit des mechanischen Systems so klein und kurz ist, daß der Endkunde mit dem bloßen Auge diese nicht wahrnehmen können wird. Dies ist für Zeitdauern von 100msec allein schon aufgrund der Grenzen der Wahrnehmbarkeit gegeben. Berücksichtigt man zudem das Verhältnis der Zeitdauer T*ᵣₑᵥ* der Reversierbestromung zur Zeitdauer T_{rück} der tatsächlich rückwärtsgerichtetenen Bewegung des bewegten Teils, so wird deutlich, daß sogar Zeitdauern von deutlich über 100msec noch ausreichen würden, damit die Rückwärtsbewegung für den Endkunden mit bloßem Auge nicht wahrnehmbar sind. Die Grenzen werden von System zu System unterschiedlich sein ; es kann davon ausgegangen werden, daß zum Teil sogar eine Reversierbestromung oder ein Stoppen im Bereich einer Sekunde an der tatsächlichen Bewegungsänderung der Scheibe kaum bemerkbar sind.

Eine weitere nicht durch Figuren näher dargestellte Alternative ergibt sich durch die Kombination der beiden Alternativen Reversieren und Stoppen in zeitlicher Abfolge, d.h. es wird zunächst kurzzeitig reversiert bestromt, bspw. um das bewegte Teil tatsächlich schnell zum Stillstand zu bringen und anschließend noch eine Stopp-Phase, also eine stromlose Phase angehängt, sofern nicht bereits bis dahin eine Änderung der Position des Karosserieteils erkannt wurde. Denkbar wäre eine gerade umgekehrte Reihenfolge.

## Patentansprüche

1. Verfahren zur Steuerung der Verstellbewegung eines mittels eines - Elektromotors bewegten Teils einer Schließvorrichtung in einem Fahrzeug,
a) wobei eine Einklemmerkennung durch ein Vergleich mindestens einer einklemmsignifikanten Zustandsgröße (I(t)) des Elektromotors oder der Schließvorrichtung mit einem für einen Einklemmfall signifikanten Kennwert (I0,I1,I2,I3) erfolgt,
b) zudem die Position (auf,zu) von beweglichen Karosserieteilen (Tür), insbesondere der Türen, erfasst wird, und
c) die Steuerung der Verstellbewegung in Abhängigkeit von der Einklemmerkennung und der Position der Karosserieteile angepasst wird,
**dadurch gekennzeichnet, daß**
d) beim Vorliegen (tx) eines einen Einklemmfall anzeigenden Vergleichsergebnisses der Elektromotor für eine vorgegebene Zeitdauer (Tstopp)
d1) gestoppt oder
d2) reversiert
e) und dabei geprüft wird, ob in einem vorgegebenen Zeitbereich (tx±ΔT) vor und/oder nach dem Auftreten des den Einklemmfall anzeigenden Vergleichsergebnisses
f) ausgehend von einer vorgegebenen ersten Position (Tür auf) des Karosserieteils eine Änderung der Position (Tür => zu) aufgetreten ist bzw. auftritt,
g) in diesem Falle die Verstellbewegung in Schließrichtung fortgesetzt wird,
h) anderenfalls ein Einklemmfall angenommen und der Elektromotor reversiert bzw. die eingeleitete Reversierung fortgesetzt wird.

2. Verfahren nach Verfahren nach Anspruch 1, **dadurch gekennzeichnet, daß**
a) bei gleichzeitigem Vorliegen des einen Einklemmfall anzeigenden Vergleichsergebnisses und der ersten Position des Karosserieteils (Tür auf in tx)
b) der Elektromotor zunächst für die vorgegebene Zeitdauer (Tstopp)
b1) gestoppt
b2) oder reversiert wird, und
c) falls innerhalb dieser Zeitdauer (Tstopp) das Positionssignal eine Änderung gegenüber der ersten Position eines Karosserieteils (Tür => zu) anzeigt, die Verstellbewegung fortgesetzt wird,
d) anderenfalls ein Einklemmfall angenommen und der Elektromotor reversiert wird.

3. Verfahren nach Verfahren nach Anspruch 1, **dadurch gekennzeichnet, daß**
a) falls ausgehend von der vorgegebenen ersten Position eine Änderung der Position des Karosserieteils (Tür auf => Tür zu) erkannt wird und
b) innerhalb eines vorgegebenen Zeitbereichs ab dieser Änderung ein einen Einklemmfall anzeigendes Vergleichsergebnis auftritt,
c) der Elektromotor für die vorgegebene Zeitdauer (Tstopp) gestoppt wird und die Verstellbewegung nachfolgend fortgesetzt wird.

4. Verfahren nach Anspruch 2, **dadurch gekennzeichnet, daß** die Position (auf, zu) der Türen des Fahrzeugs überwacht und bei gleichzeitigem Vorliegen des einen Einklemmfall anzeigenden Vergleichsergebnisses und eines eine geöffnete Tür anzeigenden Positionssignals der Elektromotor zunächst für eine vorgegebene Zeitdauer (Tstopp) gestoppt und dann die Verstellbewegung fortgesetzt wird, wenn innerhalb dieser Zeitdauer (Tstopp) ein Schließen der Tür anzeigt wird.

5. Verfahren nach einem der vorangehenden Ansprüche, **dadurch gekennzeichnet, daß** die Kennwerte zum Vergleich mit den für ein Einklemmen des Bauteils signifikanten Zustandsgrößen bei geöffneter Position eines Karosserieteils in Richtung einer zeitlich späteren Einklemmerkennung (I1>I0) angepasst werden.

6. Verfahren nach einem der vorangehenden Ansprüche, **dadurch gekennzeichnet, daß** die Kennwerte zum Vergleich mit den für ein Einklemmen des Bauteils signifikanten Zustandsgrößen in Abhängigkeit von der Position und Bewegungsrichtung des beweglichen Bauteils angepasst werden.

7. Verfahren nach einem der vorangehenden Ansprüche Verfahren nach en Anspruch 7, **dadurch gekennzeichnet, daß** die Zeitdauer (Tstopp) zum Stoppen bzw. Reversieren so kurz bemessen ist, daß das bewegte Teil zumindest nicht mit bloßem Auge wahrnehmbar in die entgegengesetzte Bewegungsrichtung bewegt wird.

8. Verfahren nach Anspruch 7, **dadurch gekennzeichnet, daß** die Zeitdauer (Tstopp) zum Stoppen bzw. Reversieren auf unter 150 msec bemessen ist.

9. Verfahren nach Anspruch 8, **dadurch gekennzeichnet, daß** die Zeitdauer (Tstopp) zum Stoppen bzw. Reversieren auf unter 100 msec bemessen ist.

10. Verfahren nach einem der vorangehenden Ansprüche, **dadurch gekennzeichnet, daß**
a) beim Vorliegen (tx) eines einen Einklemmfall anzeigenden Vergleichsergebnisses der Elektromotor
b) für eine erste vorgegebene Zeitdauer (Trev) reversiert und
c) für eine sich anschließende vorgegebene Zeitdauer (Tstopp) gestoppt wird.

11. Verfahren nach einem der Ansprüche 1 bis 9, **dadurch gekennzeichnet, daß**
a) beim Vorliegen (tx) eines einen Einklemmfall anzeigenden Vergleichsergebnisses der Elektromotor
b) für eine erste vorgegebene Zeitdauer (Tstopp) gestoppt und
c) für eine sich anschließende vorgegebene Zeitdauer (Trev) reversiert wird.

## Claims

1. Method for controlling the adjusting movement of a part of a closing device in a vehicle, said part being moved by means of an electric motor,
a) wherein jamming situations are recognized by comparing at least one jamming-significant state quantity (I(t)) of the electric motor or of the closing device with a jamming-situation-significant parameter (I0, I1, I2, I3),
b) moreover, the position (open, closed) of movable vehicle-body parts (door), in particular of the doors, is detected, and
c) the control of the adjusting movement is adapted depending on the recognition of jamming situations and on the position of the vehicle-body parts,
**characterized in that**
d) in the case (tx) of a comparison result indicating a jamming situation, the electric motor is, for a predetermined period (Tstopp),
d1) stopped or
d2) reversed,
e) and at the same time it is checked whether in a predetermined time range (tx±ΔT) prior to and/or after the occurrence of the comparison result indicating the jamming situation
f) a change of position (door → closed), starting from a predetermined first position (door open) of the vehicle-body part, has occurred or is occurring,
g) in this case, the adjusting movement is continued in the closing direction,
h) otherwise, the presence of a jamming situation is assumed and the electric motor is reversed or the initiated reversing process is continued.

2. Method according to claim 1, **characterized in that**
a) if the comparison result indicating a jamming situation, and the first position of the vehicle-body part (door open in tx) are present at the same time,
b) the electric motor is, for the predetermined period (Tstopp),
b1) stopped
b2) or reversed, and
c) if the position signal indicates, within this period (Tstopp), a change as against the first position of a vehicle-body part (door → closed), the adjusting movement is continued,
d) otherwise, the presence of a jamming situation is assumed and the electric motor is reversed.

3. Method according to claim 1, **characterized in that**
a) if, starting from the predetermined first position, a change of the position of the vehicle-body part (door open → door closed) is recognized, and
b) a comparison result indicating a jamming situation occurs within a predetermined time range starting from this change,
c) the electric motor is stopped for the predetermined period (Tstopp) and the adjusting movement is subsequently continued.

4. Method according to claim 2, **characterized in that** the position (open, closed) of the vehicle doors is monitored and, if the comparison result indicating a jamming situation and a position signal indicating an open door are present at the same time, the electric motor is stopped for a predetermined period (Tstopp) and the adjusting movement is subsequently continued if the closing of the door is indicated within this period (Tstopp).

5. Method according to any one of the preceding claims, **characterized in that** in the case of an open position of a vehicle-body part, the parameters for the comparison with the component-jamming-significant state quantities are adapted towards a later recognition of jamming situations (I1 >I0).

6. Method according to any one of the preceding claims, **characterized in that** the parameters for the comparison with the component-jamming-significant state quantities are adapted depending on the position and on the moving direction of the movable component.

7. Method according to any one of the preceding claims, **characterized in that** the period (Tstopp) for stopping or reversing is so short that the moved part is moved in the opposite moving direction without said movement being visible at least with the naked eye.

8. Method according to claim 7, **characterized in that** the period (Tstopp) for stopping or reversing is shorter than 150 ms.

9. Method according to claim 8, **characterized in that** the period (Tstopp) for stopping or reversing is shorter than 100 ms.

10. Method according to any one of the preceding claims, **characterized in that**
a) in the case (tx) of a comparison result indicating a jamming situation, the electric motor
b) is reversed for a first predetermined period (Trev), and
c) is stopped for a subsequent predetermined period (Tstopp).

11. Method according to any one of claims 1 to 9, **characterized in that**
a) in the case (tx) of a comparison result indicating a jamming situation, the electric motor
b) is stopped for a first predetermined period (Tstopp), and
c) is reversed for a subsequent predetermined period (Trev).

## Revendications

1. Procédé de commande du mouvement de réglage d'une partie, déplacée au moyen d'un moteur électrique, d'un dispositif de fermeture dans un véhicule,
a) une identification de coincement intervenant par une comparaison d'au moins une grandeur d'état (I(t)) du moteur électrique ou du dispositif de fermeture significative de coincement avec une valeur caractéristique (I0, I1, I2, I3) significative d'un cas de coincement,
b) la position (ouverte, fermée) de parties de carrosserie mobiles (porte), en particulier des portes, étant en outre détectée, et
c) la commande du mouvement de réglage étant adaptée en fonction de l'identification de coincement et de la position des parties de carrosserie,
**caractérisé en ce que**
d) en présence (tx) d'un résultat de comparaison indiquant un cas de coincement, le moteur électrique est, pendant une durée prédéfinie (Tstopp),
d1) arrêté ou
d2) inversé
e) et il est en l'occurrence examiné si, dans une plage de temps (Tx±ΔT) prédéfinie avant et/ou après l'apparition du résultat de comparaison indiquant le cas de coincement,
f) en partant d'une première position prédéfinie (porte ouverte) de la partie de carrosserie, une variation de la position (porte => fermée) est survenue ou survient,
g) le mouvement de réglage est dans ce cas poursuivi dans la direction de fermeture,
h) sinon un cas de coincement est supposé et le moteur électrique est inversé ou l'inversion lancée est poursuivie.

2. Procédé selon la revendication 1, **caractérisé en ce que**,
a) en cas de présence simultanée du résultat de comparaison indiquant un cas de coincement et de la première position de la partie de carrosserie (porte ouverte en tx),
b) le moteur électrique est d'abord, pendant la durée prédéfinie (Tstopp),
b1) arrêté
b2) ou inversé, et
c) dans le cas où, à l'intérieur de cette durée (Tstopp), le signal de position indique une variation par rapport à la première position d'une partie de carrosserie (porte => fermée), le mouvement de réglage est poursuivi,
d) sinon un cas de coincement est supposé et le moteur électrique est inversé.

3. Procédé selon la revendication 1, **caractérisé en ce que**,
a) dans le cas où, en partant de la première position prédéfinie, une variation de la position de la partie de carrosserie (porte ouverte => porte fermée) est identifiée et,
b) à l'intérieur d'une plage de temps prédéfinie à partir de cette variation, un résultat de comparaison indiquant un cas de coincement apparaît,
c) le moteur électrique est arrêté pendant la durée prédéfinie (Tstopp), et le mouvement de réglage est ensuite poursuivi,

4. Procédé selon la revendication 2, **caractérisé en ce que** la position (ouverte, fermée) des portes du véhicule est surveillée et, en cas de présence simultanée du résultat de comparaison indiquant un cas de coincement et d'un signal de position indiquant une porte ouverte, le moteur électrique est d'abord arrêté pendant une durée prédéfinie (Tstopp), et ensuite le mouvement de réglage est poursuivi si, à l'intérieur de cette durée (Tstopp), une fermeture de la porte est indiquée.

5. Procédé selon une des revendications précédentes, **caractérisé en ce que** les valeurs caractéristiques pour la comparaison avec les grandeurs d'état significatives d'un coincement du composant en cas de position ouverte d'une partie de carrosserie sont adaptées dans le sens d'une identification de coincement (I1>I0) postérieure dans le temps.

6. Procédé selon une des revendications précédentes, **caractérisé en ce que** les valeurs caractéristiques pour la comparaison avec les grandeurs d'état significatives d'un coincement du composant sont adaptées en fonction de la position et de la direction de mouvement du composant mobile.

7. Procédé selon une des revendications précédentes, **caractérisé en ce que** la durée (Tstopp) pour l'arrêt ou l'inversion est dimensionnée à ce point courte que la partie déplacée est déplacée dans la direction de mouvement opposée, de façon non perceptible du moins à l'oeil nu.

8. Procédé selon la revendication 7, **caractérisé en ce que** la durée (Tstopp) pour l'arrêt ou l'inversion est dimensionnée à une valeur inférieure à 150 msec.

9. Procédé selon la revendication 8, **caractérisé en ce que** la durée (Tstopp) pour l'arrêt ou l'inversion est dimensionnée à une valeur inférieure à 100 msec.

10. Procédé selon une des revendications précédentes, **caractérisé en ce que**
a) en présence (tx) d'un résultat de comparaison indiquant un cas de coincement, le moteur électrique
b) est inversé pendant une première durée prédéfinie (Trev) et
c) est arrêté pendant une durée prédéfinie (Tstopp) suivante.

11. Procédé selon une des revendications 1 à 9, **caractérisé en ce que**
a) en présence (tx) d'un résultat de comparaison indiquant un cas de coincement, le moteur électrique
b) est arrêté pendant une première durée prédéfinie (Tstopp) et
c) est inversé pendant une durée prédéfinie (Trev) suivante.
